# EUROPÄISCHE PATENTSCHRIFT

(11) **EP 1 923 291 B1**
(45) Veröffentlichungstag und Bekanntmachung des Hinweises auf die Patenterteilung: **12.01.2011**
(21) Anmeldenummer: 07116531.0
(22) Anmeldetag: 17.09.2007
(51) Int. Cl.: B60W 30/18, B60W 40/12, B60W 40/10

(54) **Verfahren zur Schwungnutzung eines Kraftfahrzeuges und Vorrichtung hierfür**
Method for utilising the impetus of a motor vehicle and device therefor
Procédé d'utilisation de l'énergie cinétique d'un véhicule automobile et son dispositif

(30) Priorität: 17.11.2006 DE 102006054327
(43) Veröffentlichungstag der Anmeldung: 21.05.2008
(73) Patentinhaber: ROBERT BOSCH GMBH, 70442 Stuttgart (DE)
(72) Erfinder: Lueer, Stefan, 31139 Hildesheim (DE)

(56) Entgegenhaltungen:
- EP-A- 1 777 135
- DE-A1- 10 141 805
- DE-A1- 10 333 962
- DE-A1-102004 017 115
- DE-A1-102005 003 608

## Beschreibung

Die vorliegende Erfindung betrifft ein Verfahren zur Schwungnutzung eines Kraftfahrzeuges, bei dem Positionsdaten und Geschwindigkeitsdaten des Kraftfahrzeuges erfasst werden und zusammen mit Daten einer digitalisierten Karte eines Straßennetzes verarbeitet werden. Die Erfindung betrifft ferner eine Vorrichtung zur Durchführung des Verfahrens.

Bei der Verwendung von Kraftfahrzeugen zur Fortbewegung sind häufig Änderungen bzw. Anpassungen der Fahrgeschwindigkeit erforderlich. Ein Großteil dieser Geschwindigkeitsänderungen ist durch andere Verkehrsteilnehmer bedingt, deren individuelles und ungleichmäßiges Fahrverhalten in entsprechender Weise zu berücksichtigen ist, um Kollisionen und/oder Unfälle im Straßenverkehr zu vermeiden. Diese Geschwindigkeitsänderungen sind im Allgemeinen situationsbezogen und können folglich auch nicht vorherbestimmt werden.

Ein anderer Teil der Geschwindigkeitsänderungen steht im Zusammenhang mit externen Vorgaben der Sollgeschwindigkeit, beispielsweise der zulässigen Höchstgeschwindigkeit. Hier kommt es insbesondere vor der Einfahrt in eine Ortschaft an den Ortsschildern, an Straßenkreuzungen mit einem Stopp-Schild oder vor anderen Geschwindigkeitsbegrenzungsschildern zu von dem Fahrzeugführer veranlassten Bremsvorgängen des Kraftfahrzeuges, um die Fahrgeschwindigkeit entsprechend zu reduzieren.

Bei üblichen Bremsanlagen für Kraftfahrzeuge wird die Bremswirkung durch Reibung erzielt. Dabei wird kinetische Energie aufgrund der in den Bremsanlagen erzeugten Reibung zwischen Bremsscheiben und Bremsbelägen in thermische Energie umgewandelt. Die entstehende thermische Energie wird anschließend an die Umgebung abgeführt. Diese Energiemenge geht somit dem System Kraftfahrzeug unnütz verloren und die kinetische Energie bzw der Schwung des Fahrzeuges wird nicht optimal ausgenutzt.

Aus der saltungsbildende 1 DE-A-10 2004 017 115 ist ein Verfahren zur automatischen Geschwindigkeitsregelung eines Kraftfahrzeugs bekannt, bei welchem durch alternierenden Beschleunigungs- und antriebslosen Ausrollbetrieb die Fahrzeuggeschwindigkeit innerhalb einer Bandbreite um eine Sollgeschwindigkeit gehalten wird. Zur vorausschauenden verbrauchs- und emisslonsoptimierten Steuerung der Abfolge von Beschleunigungs- und Ausrollphasen können topografische Parameter eines kartengestützten Navigationssystems genutzt werden. Daneben können auch äußere Randbedingungen wie Windrichtung oder erhöhte Fahrtwiderstände durch Dachgepäekträger oder Anhängen berücksichtigt werden.

Aus den ebenfolls gallungsbildenden DE-A-10 2005 003 608 und DE-A-103 33 962 sind ähnliche Ansätze bekannt.

Vor diesem Hintergrund ist es die Aufgabe der vorliegenden Erfindung, den Schwung eines Fahrzeuges optimal auszunutzen, um sowohl Energie und Kosten einzusparen, als auch die Umwelt zu schonen.

Diese Aufgabe wird durch ein Verfahren mit den Merkmalen gemäß Anspruch 1 sowie durch eine Vorrichtung mit den Merkmalen gemäß Anspruch 8 gelöst Die in den Unteransprüchen aufgeführten Merkmale betreffen vorteilhafte Ausführungsforment.

ßei einem Verfahren der eingangs beschriebenen Art ist erfindungsgemäß vorgesehen, dass bei dem Verarbeiten der Daten ein Startpunkt ermittelt wird, an dem ein Ausrollen des Kraftfahrzeuges initiiert wird. Wesentlicher Kern der Erfindung ist es, dass zu einem richtigen Moment die Energicezufuhr zum Antriehsmotor des Kraftfahrzeuges abgeschaltet bzw. unterbrochen wird und somit das Kraftfahrzeug ohne einen erneuten Beschleunigungsvorgang ausrollt. Ein wichtiger Aspekt hierbei ist die präzise Ermittlung des Startpunktes, ab dem die Ausrollphase stattfinden soll, damit das Kraftfahrzeug mit der richtigen Geschwindigkeit am Anfang des Streckenabschnittes mit einer Geschwindigkeitsbegrenzung ankommt. Ein Abbremsen des Kraftfahrzeuges mit Hilfe der Bremsanlage, bei dem thermische Energie in die Fahrzeugumgebung abgegeben wird, ist somit nicht unbedingt erforderlich. Hierdurch werden sowohl Energie und Kosten eingespart, als auch ein Beitrag zur Umweltschonung geleislet.

Bei dem erfindungsgemäßen Verfahren wird für eine bestimmte Position der Verlauf der entsprechenden Ausrollgeschwindigkeit berechnet, die berechnete Ausrollgeschwindigkeit mit Grenzgeschwindigkciten verglichen, die vor dem Kraftfahrzeug befindlichen Streckenabschnitten des straßennetzes zugeordnet sind und diese Position als Startpunkt festgelegt, wenn die Ausrollgeschwindigkcit zumindest eine der Grenzgeschwindigkeiten überschreitet. Hierdurch wird Sichergestellt, dass die Fahrgeschwindigkeit des Kraftfahrzeuges in den vorausliegenden Streckenabschnitten mit einer Geschwindigkeitsbegrenzung unterhalh der jeweils zulässigen Höchstgeschwindigkeit liegt und somit ein aktiver Bremsvorgang vermieden werden kann.

Da naturgemäß das Straßennetz nicht vollständig eben ist, sondern vielerorts Steigungen vorhanden sind, ist in vorteilhafter Weise vorgesehen, dass bei der Ermittlung des Startpunktes Neigungsdaten des Straßennetzes berücksichtigt werden. Die Neigungs- bzw. Steigungsdaten der einzelnen Straßen des Straßennetzes können ebenfalls in der digitalisierten Karte abgelegt sein. Alternativ können die Neigungsdaten ermittelt werden, beispielsweise unter Verwendung der erfassten GPS-Höhenänderung.

Da jeder Kraftfahrzeugstyp ein anderes Rollverhalten aufweist, ist bevorzugt vorgesehen, dass bei der Ermittlung des Startpunktes fahrzeugspezifische Kenndaten berücksichtigt werden. Die fahrzeugspezifischen Kenndaten können ebenfalls abgespeichert werden, damit sie zur Berechung zur Verfügung stehen.

Da das Gesamtgewicht des Kraftfahrzeuges einen erheblichen Einfluss auf das Rollverhalten aufweist, ist weiterhin vorteilhaft vorgesehen, dass bei der Ermittlung des Startpunktes Beladungsdaten des Kraftfahrzeuges berücksichtigt werden.

Schließlich ist bevorzugt vorgesehen, dass bei der Ermittlung des Startpunktes Umwelteinflüsse berücksichtigt werden. Dies ermöglicht insbesondere die Berücksichtigung von veränderlichen Luftwiderstandwerten des Kraftfahrzeuges aufgrund der vorherrschenden und wechselhaften Windverhältnisse.

Bei einer vorteilhaften Ausgestaltung des erfindungsgemäßen Verfahrens ist vorgesehen, dass die Initiierung des Ausrollens durch einen akustischen und/oder optischen Hinweis erfolgt. Aufgrund dieses Hinweises kann der Fahrer selbstständig entscheiden, ob er entweder nur seinen Fuß vom Gaspedal nehmen oder alternativ hierzu vollständig auskuppeln möchte. Die Führung und Steuerung des Kraftfahrzeuges verbleibt aber gänzlich in der Verantwortung des Fahrers.

Alternativ kann in vorteilhafter Weise vorgesehen sein, dass bei der Initiierung des Ausrollens automatisch ein Antrieb durch einen Antriebsmotor unterbrochen wird. Dies bewirkt die größtmögliche Energieeinsparung, da grundsätzlich das Ausrollen einsetzt, wenn die entsprechenden Bedingungen und Voraussetzungen erfüllt sind. Zur erneuten Übernahme der Steuerung durch den Fahrzeugführer kann der initiierte Ausrollvorgang durch ein Betätigen des Gaspedals beendet werden.

Die erfindungsgemäße Vorrichtung zur Durchführung des Verfahrens weist eine Positionserfassungseinrichtung, eine Geschwindigkeitserfassungseinrichtung, eine Speichereinrichtung und eine Datenverarbeitungseinrichtung auf. Erfindungsgemäß ist vorgesehen dass die Datenverarbeitungseinrichtung eingerichtet ist, erfasste Positions-und Geschwindigkeitsdaten eines Kraftfahrzeuges zusammen mit Daten einer digitalisierten Karte eines Straßennetzes zu verarbeiten, um einen Startpunkt zu ermitteln, an dem ein Ausrollen des Kraftfahrzeuges initiiert wird.

Die Datenverarbeitungseinrichtung ist eingerichtet, für eine bestimmte Position der Verlauf der entsprechenden Ausroligeschwindigkeit zu berechnen, die berechnete Ausrollgeschwindigkeit mit Grenzgeschwindigkeiten zu vergleichen, die vor dem Kraftfahrzeug befindlichen Streckenabschnitten des Straßennetzes zugeordnet sind und diese Position als Startpunkt festzulegen, wenn die Ausrollgeschwindigkeit zumindest eine der Grenzgeschwindigkeiten überschreitet.

Bevorzugt ist die Datenverarbeitungseinrichtung ein Navigationssystem, da die meisten der erforderlichen Daten in diesem bereits vorhanden sind.

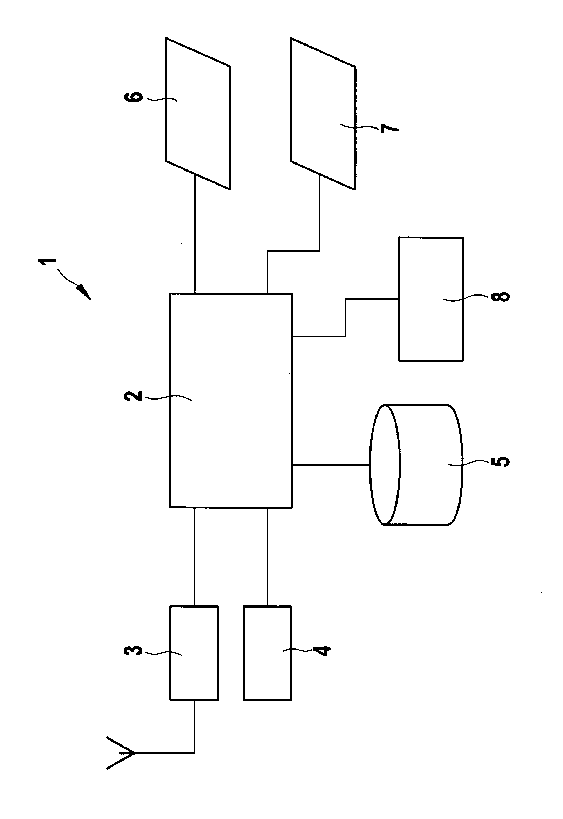

Nachfolgend wird eine Ausführungsform der vorliegenden Erfindung unter Bezug auf die beigefügte einzige Figur beispielhaft näher erläutert, die schematisch skizziert eine erfindungsgemäße Vorrichtung zeigt.

Ein wesentlicher Aspekt bei der Schwungnutzung eines Kraftfahrzeuges ist die präzise Ermittlung des Momentes bzw. der Stelle, ab dem eine Ausrollphase in sinnvoller Weise stattfinden sollte. Hierfür sind sowohl die aktuelle Fahrzeugposition als auch die aktuelle Fahrzeuggeschwindigkeit sowie der Streckenabschnitt unbedingt erforderlich, in dem eine aktuelle Begrenzung der zulässigen Höchstgeschwindigkeit vorgesehen ist. Zur möglichst präzisen Ermittlung sind ferner der Straßenverlauf, die Neigung bzw. Steigung der Straße und auch fahrzeugspezifische Kenndaten, beispielsweise der Luftwiderstand und/oder der Rollwiderstand, zu berücksichtigen. Schließlich spielen veränderliche Parameter, beispielsweise das Gewicht der Zuladung und die Windverhältnisse eine nicht unerhebliche Rolle.

Da die meisten dieser Informationen in einem Navigationssystem bereits vorliegen, wird dieses als zentrales Steuerelement der erfindungsgemäßen Schwungnutzung ausgewählt. Die nicht vorliegenden Daten können durch eine Verknüpfung von weiteren

Sensorinformationen abgefragt werden, die per Datennetz in dem Fahrzeug verteilt werden.

In der Figur ist in einer vereinfachten Darstellung ein Navigationssystem 1 für ein Kraftfahrzeug (nicht dargestellt) mit einer zentralen Datenverarbeitungseinrichtung 2, üblicherweise ein entsprechend geeigneter Mikroprozessor, gezeigt. Die Datenverarbeitungseinrichtung 2 ist mit einer Positionserfassungseinrichtung 3 verbunden. Dieses Ortungssystem kann beispielsweise das satellitengestützte GPS (Global Positioning System), das europäische Galileo-System oder jedes andere geeignete System sein. Ferner kann unter Verwendung eines als Map-Matching bezeichneten Verfahrens die aktuelle Fahrzeugposition ermittelt werden. Eine geeignete Kombination der vorstehend aufgezählten Möglichkeiten ist ebenfalls denkbar.

Ferner ist die Datenverarbeitungseinrichtung 2 mit einer Geschwindigkeitserfassungseinrichtung 4, beispielsweise ein Odometer, verbunden. Die von der Positionserfassungseinrichtung 3 bestimmten Positionsdaten und die von der Geschwindigkeitserfassungseinrichtung 4 gemessenen Geschwindigkeitsdaten werden jeweils an die Datenverarbeitungseinrichtung 2 übertragen, die die entsprechenden Daten empfängt und bei der Ermittlung des Startpunktes berücksichtigt. Die Ermittlung des Startpunktes durch Berechnung des Verlaufs der Ausrollgeschwindigkeit wird regelmäßig wiederholt, es findet somit eine kontinuierliche Nachberechung statt.

Ferner ist eine Speichereinrichtung 5 vorgesehen, die mit der Datenverarbeitungseinrichtung 2 verbunden ist. In der Speichereinrichtung 5 sind zumindest die Daten einer digitalisierten Karte eines Straßennetzes hinterlegt. Weiterhin können in der Speichereinrichtung 5 die fahrzeugspezifischen Kenndaten des Fahrzeuges gespeichert sein. Aus den an die Datenverarbeitungseinrichtung 2 gesendeten Karten-, Positions- und Geschwindigkeitsdaten ermittelt diese einen Startpunkt, an dem erfindungsgemäß ein Ausrollen des Kraftfahrzeuges initiiert wird.

Die dargestellte Speichereinrichtung 5 kann beispielsweise ein einziger Lese-/Schreibspeicher sein oder alternativ mehrere, physikalisch getrennte Speicher für jeweils unterschiedliche Speicherfunktionen aufweisen. Die Speichereinrichtung 5 kann eine CD-ROM, eine DVD, eine SD-Card oder jedes andere geeignete Speichermedium sein. In der Darstellung der Figur ist die Speichereinrichtung 5 vereinfacht als ein einziger Speicher wiedergegeben.

Das Navigationssystem 1 weist ferner eine Eingabeeinrichtung 6 zur Eingabe des Zieles und weiterer für die Bedienung des Navigationssystems 1 notwendiger Parameter durch den Nutzer bzw. den Fahrzeugführer auf. Schließlich ist eine Ausgabeeinrichtung 7 zur akustischen und/oder optischen Ausgabe der Zielführung und weiterer Hinweise vorgesehen.

Um bei der Initiierung des Ausrollvorganges automatisch den Antrieb durch einen Antriebsmotor zu unterbrechen, ist in dem in der Figur dargestellten Ausführungsbeispiel die Datenverarbeitungseinrichtung 2 mit einer Motorsteuerung 8 verbunden. Die Motorsteuerung 8 kann dann zum optimalen Moment auskuppeln und den Motor in den Leerlauf herunterregeln. Die Motorsteuerung 8 registriert, wenn der Fahrer das Bremspedal betätigt oder stärker das Gaspedal betätigt, und kuppelt dann den Antriebsmotor wieder ein. Das automatische Ausrollen erfordert ein Kraftfahrzeug mit einem Automatikgetriebe. Das Ausrollen ist durch eine geeignete Software-Kopplung der Komponenten Navigation, Getriebesteuerung, ABS-Controller und Motormanagement steuerbar.

Bei einem halbautomatischen Ausrollen, d. h. dem Fahrer wird zum gegebenen Zeitpunkt ein optisches und/oder akustisches Hinweissignal übermittelt und er nimmt selber den Fuß vom Gaspedal bzw. er kuppelt zusätzlich aus, ist die dargestellte Motorsteuerung 8 nicht erforderlich. Ein derartiges Navigationssystem ohne Kommunikationsverbindung mit dem Motor kann ohne technische Schwierigkeiten und mit einem geringen Aufwand in Kraftfahrzeugen nachgerüstet werden.

Die Werte üblicher Bremsverzögerungen beim Ausrollen werden in Abhängigkeit der zu dem Fahrzeug und zu dem Fahrzeugführer passenden Ausrollart, d.h. mit oder ohne Motorbremsung, der Datenverarbeitungseinrichtung 2 für den aktuellen Fahrzeugtyp bei verschiedenen Steigungen, Zuladungen und Windverhältnissen vorgegeben. Unter Zugriff auf diese Vorgaben wird dann der Verlauf der Ausrollgeschwindigkeit berechnet. Alternativ kann die Bremsverzögerung in einem Kalibrierzyklus ermittelt werden. Hierzu wird ein Verbrauchsprofil in den gleichen Fahrsituationen erstellt. Während der Fahrt wird über den Vergleich des Verbrauchsprofils mit den von der Motorsteuerung 8 gemeldeten Ist-Verbräuchen eine Ermittlung der Einzelfaktoren Zuladung und Windverhältnisse vorgenommen. Dies kann beispielsweise unter Nutzung von Fuzzy-Control und/oder neuronalen Netzen erfolgen.

Liegt in der Datenverarbeitungseinrichtung 2 eine berechnete Zielroute vor, kann die erfindungsgemäße Schwungnutzung auch vor Abbiegepunkten angewendet werden. Im Allgemeinen jedoch ist ein Einsatz der Schwungnutzung vor Kurven im Straßenverlauf möglich.

## Patentansprüche

1. Verfahren zur Schwungnutzung eines Kraftfahrzeuges, bei dem Positionsdaten und Geschwindigkeitsdaten des Kraftfahrzeuges erfasst werden und zusammen mit Daten einer digitalisierten Karte eines Straßennetzes verarbeitet werden, wobei bei dem Verarbeiten der Daten ein Startpunkt ermittelt wird, an dem ein Ausrollen des Kraftfahrzeuges initilert wird,
**dadurch gekennzeichnet, dass** für eine bestimmte Position der Verlauf der entsprechenden Ausrollgeschwindigkeit berechnet wird, die berechnete Ausrollgeschwindigkeit mit Grenzgeschwindigkeiten verglichen wird, die vor dem Kraftfahrzeug befindlichen Streckenabschnitten des Straßennetzes zugeordnet sind und diese Position als Startpunkt festgelegt wird, wenn die Ausrollgeschwindigkeit zumindest eine der Grenzgeschwindigkeiten überschreitet.

2. Verfahren nach Anspruch 1, **dadurch gekennzeichnet, dass** bei der Ermittlung des Startpunktes Neigungsdaten des Straßennetzes berücksichtigt werden.

3. Verfahren nach einem der vorstehenden Ansprüche, **dadurch gekennzeichnet, dass** bei der Ermittlung des Startpunktes fahrzeugspezifische Kenndaten berücksichtigt werden.

4. Verfahren nach einem der vorstehenden Ansprüche, **dadurch gekennzeichnet, dass** bei der Ermittlung des Startzeitpunktes Beladungsdaten des Kraftfahrzeuges berücksichtigt werden.

5. Verfahren nach einem der vorstehenden Ansprüche, **dadurch gekennzeichnet, dass** bei der Ermittlung des Startpunktes Umwelteinflüsse berücksichtigt werden.

6. Verfahren nach einem der vorstehenden Ansprüche, **dadurch gekennzeichnet, dass** die Initiierung des Ausrollens durch einen akustischen und/oder optischen Hinweis erfolgt.

7. Verfahren nach einem der Ansprüche 1 bis 5, **dadurch gekennzeichnet, dass** bei der Initiierung des Ausrollens automatisch ein Antrieb durch einen Antriebsmotor unterbrochen wird.

8. Vorrichtung zur Durchführung des Verfahrens nach einem der Ansprüche 1 bis 7, mit einer Positionserfassungseinrichtung (3), einer Geschwindigkeitserfassungseinrichtung (4), einer Speichereinrichtung (5) und einer Datenverarbeitungseinrichtung (2), wobei die Datenverarbeitungseinrichtung (2) eingerichtet ist, erfasste Positions- und Geschwindigkeitsdaten eines Kraftfahrzeuges zusammen mit Daten einer digitalisierten Karte eines Straßennetzes zu verarbeiten, um einen Startpunkt zu ermitteln, an dem ein Ausrollen des Kraftfahrzeuges initiiert wird, **dadurch gekennzeichnet, dass** die Datenverarbeitungseinrichtung (2) eingerichtet ist, für eine bestimmte Position der Verlauf der entsprechenden Ausrollgeschwindigkeit zu berechnen, die berechnete Ausrollgeschwindigkeit mit Grenzgeschwindigkeiten zu vergleichen, die vor dem Kraftfahrzeug befindlichen Streckenabschnitten des Straßennetzes zugeordnet sind und diese Position als Startpunkt festzulegen, wenn die Ausrollgeschwindigkeit zumindest eine der Grenzgeschwindigkeiten überschreitet.

9. Vorrichtung nach Anspruch 8, **dadurch gekennzeichnet, dass** die Datenverarbeitungseinrichtung (2) ein Navigationssystem (1) ist.

## Claims

1. Method for utilizing the impetus of a motor vehicle, in which position data and speed data of the motor vehicle are sensed and are processed together with data of a digitized map of a road network, wherein during the processing of the data a starting point at which coasting of the motor vehicle is initiated is determined,
**characterized in that**, for a specific position, the profile of the corresponding coasting speed is calculated and the calculated coasting speed is compared with limiting speeds which are assigned to route sections of the road network which are located ahead of the motor vehicle and this position is defined as a starting point if the coasting speed exceeds at least one of the limiting speeds.

2. Method according to Claim 1, **characterized in that** inclination data of the road network are taken into account in the determination of the starting point.

3. Method according to one of the preceding claims, **characterized in that** vehicle-specific characteristic data are taken into account in the determination of the starting point.

4. Method according to one of the preceding claims, **characterized in that** load data of the motor vehicle are taken into account in the determination of the starting point.

5. Method according to one of the preceding claims, **characterized in that** environmental influences are taken into account in the determination of the starting point.

6. Method according to one of the preceding claims, **characterized in that** the coasting is initiated by means of an audible and/or visual indication.

7. Method according to one of Claims 1 to 5, **characterized in that** driving by a drive motor is interrupted automatically when the coasting is initiated.

8. Device for carrying out the method according to one of Claims 1 to 7, having a position-sensing device (3), a speed-sensing device (4), a storage device (5) and a data-processing device (2), wherein the data-processing device (2) is configured to process acquired position data and speed data of a motor vehicle together with data of a digitized map of a road network, in order to determine a starting point at which coasting of the motor vehicle is initiated, **characterized in that** the data-processing device (2) is configured to calculate, for a specific position, the profile of the corresponding coasting speed and to compare the calculated coasting speed with limiting speeds which are assigned to route sections of the road network which are located ahead of the motor vehicle and to define this position as a starting point if the coasting speed exceeds at least one of the limiting speeds.

9. Device according to Claim 8, **characterized in that** the data-processing device (2) is a navigation system (1).

## Revendications

1. Procédé pour l'utilisation du moment d'inertie d'un véhicule automobile, dans lequel des données de position et de vitesse du véhicule automobile sont détectées et sont traitées conjointement avec des données d'une carte numérique d'un réseau routier, un point de départ, auquel est lancée une conduite en roue libre du véhicule automobile, étant déterminé lors du traitement des données,
**caractérisé en ce que** pour une position déterminée, la courbe de la vitesse de roue libre correspondante est calculée, la vitesse de roue libre calculée est comparée à des vitesses limites qui sont associées à des portions de la voie du réseau routier devant le véhicule automobile, et cette position est définie comme point de départ lorsque la vitesse de roue libre dépasse au moins l'une des vitesses limites.

2. Procédé selon la revendication 1, **caractérisé en ce que** des données d'inclinaison du réseau routier sont prises en compte lors de la détermination du point de départ.

3. Procédé selon l'une quelconque des revendications précédentes, **caractérisé en ce que** lors de la détermination du point de départ, des données caractéristiques spécifiques au véhicule sont prises en compte.

4. Procédé selon l'une quelconque des revendications précédentes, **caractérisé en ce que** lors de la détermination du point de départ, des données de charge du véhicule automobile sont prises en compte.

5. Procédé selon l'une quelconque des revendications précédentes, **caractérisé en ce que** lors de la détermination du point de départ, l'influence de l'environnement est prise en compte.

6. Procédé selon l'une quelconque des revendications précédentes, **caractérisé en ce que** le lancement de la conduite en roue libre est effectué par une indication acoustique et/ou optique.

7. Procédé selon l'une quelconque des revendications 1 à 5, **caractérisé en ce que** lors du lancement de la conduite en roue libre, un entraînement par un moteur d'entraînement est automatiquement coupé.

8. Dispositif pour mettre en oeuvre le procédé selon l'une quelconque des revendications 1 à 7, comprenant un dispositif de détection de position (3), un dispositif de détection de vitesse (4), un dispositif de mémoire (5) et un dispositif de traitement des données (2), le dispositif de traitement des données (2) étant prévu pour traiter des données de position et de vitesse d'un véhicule automobile conjointement avec des données d'une carte numérique d'un réseau routier, afin de déterminer un point de départ auquel est lancée une conduite en roue libre du véhicule automobile, **caractérisé en ce que** le dispositif de traitement des données (2) est prévu pour calculer une position déterminée de la courbe de vitesse de roue libre correspondante, pour comparer la vitesse de roue libre calculée avec des vitesses limites qui sont associées à des portions de voie du réseau routier se trouvant devant le véhicule automobile, et pour définir cette position comme point de départ lorsque la vitesse de roue libre dépasse au moins l'une des vitesses limites.

9. Dispositif selon la revendication 8, **caractérisé en ce que** le dispositif de traitement des données (2) est un système de navigation (1).
